# EUROPEAN PATENT SPECIFICATION

(11) **EP 0 568 560 B1**
(45) Date of publication and mention of the grant of the patent: **05.03.1997**
(21) Application number: 92902887.6
(22) Date of filing: 20.01.1992
(51) Int. Cl.: B29C 65/06, F02M 35/10

(54) **AN INTERNAL COMBUSTION ENGINE INLET MANIFOLD**
EINE LUFTEINLASSLEITUNG FÜR VERBRENNUNGSMOTOREN
UN COLLECTEUR D'ADMISSION DE MOTEUR A COMBUSTION INTERNE

(30) Priority: 22.01.1991 GB 9101428; 17.08.1991 GB 9117821
(43) Date of publication of application: 10.11.1993
(73) Proprietor: ROVER GROUP LIMITED, Warwick CV34 6RG (GB)
(72) Inventor: PARR, Thomas, Graham, Coventry CV3 6ER (GB); SMITH, Gordon Frederick, Nuneaton Warwickshire CV12 0BE (GB)
(74) Representative: Farrow, Robert Michael
(86) International application number: GB9200114
(87) International publication number: WO9212845

(56) References cited:
- EP-A- 0 121 207
- GB-A- 1 421 326
- GB-A- 1 569 410
- US-A- 3 692 614
- US-A- 4 601 927
- US-A- 4 791 964
- US-A- 4 844 320
- US-A- 4 925 510
- PATENT ABSTRACTS OF JAPAN vol. 8, no. 73 (M-287)(1510) 5 April 1984 & JP-A-58 219 019 (KOJIMA PRESS KOGYO) 20 December 1983
- WORLD PATENTS INDEX LATEST Week 8715, Derwent Publications Ltd., London, GB; AN 87-104114(15) & JP-A-62 050 124 (TOSHIBA KK) 4 March 1987
- PLASTICS ENGINEERING. vol. 43, November 1987, BROOKFIELD CENTER,CT,USA page 46; 'Low-frequency linear vibration welder'
- PATENT ABSTRACTS OF JAPAN vol. 12, no. 169 (M-699)(3016) 20 May 1988 & JP-A-62 284 729 (TOYODA GOSEI) 10 December 1982
- PLASTICS ENGINEERING. vol. 39, no. 6, June 1983, BROOKFIELD CENTER, CONNECTICUT, USA pages 27 - 29; J.A. MOCK: 'Joining large plastic parts? Try vibration welding'
- SOCIETY OF AUTOMOTIVE ENGINEERS (860581)(1987) (0096-736X/87/9503-0659) pages 3.659 - 3.667 M.N. WATSON "Welding Plastics for the Automotive Industry "
- PLASTICS ENGINEERING. vol. 36, August 1980, MANCHESTER,NEW HAMPSHIRE USA pages 20 - 23; JAMES MENGASON: 'Vibration welding - shaking up the status quo in joining plastics'

## Description

This invention relates to internal combustion engine inlet manifolds. Particularly it relates to an internal combustion engine inlet manifold having a housing which comprises a composite plastics structure.

It is known to fabricate composite plastics structures, including internal combustion engine inlet manifolds, by forming a first plastics component with a first joint face, forming a second plastics component with a second, complementary, joint face and joining the components at the joint faces.

In "Welding Plastics for the Motor Industry", Martin N. Watson, Society of Automotive Engineers Paper No. 860581, various techniques for joining plastics are discussed, including vibration welding of an automobile inlet manifold. The techniques of vibration welding are described in more detail in "Vibration welding- shaking up the status quo in joining plastics", Plastics Engineering Vol. 36, No. 8, August 1980, pages 20-23. In Patent Abstracts of Japan, Vol. 8, No. 73(M-287)(1510) April 5, 1984 (JP-A-58-219019) there is described an air cleaner made from two resin components joined by friction welding.

Particular difficulties arise when the joint faces are non-planar and it is an object of the invention to provide an internal combustion engine inlet manifold having a housing comprising a composite plastics structure which includes a curved joint face and which overcomes these difficulties.

According to the invention there is provided an internal combustion engine inlet manifold having a housing defining a plenum, an inlet port to connect the plenum to atmosphere and a number of inlet tracts each connected to and extending from the plenum for connection to an engine to be supplied with air, each inlet tract including a curved tract portion which is defined by a respective curved duct portion of the housing in which each curved duct portion extends over an angle substantially greater than 90 degrees but substantially less than 270 degrees so that in use each curved duct portion substantially reverses the direction of gas flow through the inlet tract, the housing comprising a first component of plastics material having a first joint face thereon and a second component of plastics material having a second, complementary, joint face thereon, the components being joined by aligning the components with the joint faces in substantially uniform contact, applying a clamping force to create pressure on the joint faces and vibrating one component relative to the other whilst maintaining the clamping force to create friction at the joint faces and thereby join the components by welding of the plastics material, the joint faces being curved in the region of the curved duct so that in said region one component is substantially on the inside of the curve and the other component is substantially on the outside of the curve and arranged so that no part of each joint face is inclined at an angle substantially greater than 60 degrees to a plane perpendicular to the direction of the clamping force.

Preferably, the joint faces are curved in the opposite direction to the curve of the duct in the region of each end of the curved duct portions, in which case it is preferred that no part of the joint face where curved in said opposite direction is inclined at an angle substantially less than 10 degrees to a plane perpendicular to the clamping force.

Conveniently, before the components are joined, the first joint face has a projecting tongue with an end face thereon positioned intermediate two side edges of the first joint face and the second joint face has an abutment surface intermediate two side edges of the second joint face, the arrangement being such that when the clamping force is applied the end face of the tongue abuts the abutment surface with substantially uniform contact over the full length of the tongue. In this case the first joint face may have a first peripheral land adjacent one of the respective side edges and the second joint face have a second peripheral land adjacent one of the respective side edges, the joint faces being arranged so that when the components are aligned with the end face of the tongue in abutment with the abutment surface the peripheral lands are opposite and with a predetermined gap therebetween which is substantially constant in the direction of the clamping force and vibration of one component relative to the other is ceased when the predetermined gap is substantially eliminated.

Conveniently, one of said peripheral lands is on a peripheral rib on the same joint face as the abutment surface, the peripheral rib having slots which allow inspection of the interface between the end face of the tongue and the abutment surface.

The width of the tongue may be varied in accordance with the inclination of the joint faces to a plane perpendicular to the direction of the clamping force, to provide a substantially constant volume of weld material per unit length of joint face.

Said one plastics component may include a flange to connect the manifold to the engine, adjacent duct portions conveniently being interconnected at the flange and by a wall portion of the plenum to form one single plastics component.

Adjacent duct portions of said other plastics component may be interconnected in the region of adjacent portions of the joint faces.

Said one plastics component preferably has substantially greater rigidity than said other plastics component.

Other aspects of the invention will be apparent from the appended Claims and from the following description of the invention which is given by way of example and with reference to the accompanying drawings, of which:-
Figure 1 is a cross-sectional view of a composite plastics structure comprising part of a first embodiment of an internal combustion engine inlet manifold according to the invention;
Figure 2 is a perspective view of one component of the structure shown in Figure 1 in the direction of arrow A;
Figure 3 is a perspective view of another component of the structure shown in Figure 1 in the direction of arrow B;
Figure 4 shows magnified and in greater detail a pair of abutting joint faces of the components shown in Figures 1 to 3 before joining;
Figure 5 shows the components shown in Figures 1 to 4 mounted in tools in preparation for joining at the joint faces;
Figure 6 is a view similar to Figure 4 showing the abutting joint faces when the components are mounted in the tools shown in Figure 5;
Figure 7 is a view on arrow C in Figure 4;
Figure 8 is a view similar to Figure 7 showing the joint faces inclined to the clamping force F shown in Figure 5.
Figure 9 is a perspective view of an inlet flange adapter which when added to the structure shown in Figures 1 to 3 completes the main structure of the internal combustion engine inlet manifold;
Figure 10 is a view similar to Figure 4 showing a first modification;
Figure 11 is a view similar to Figure 4 showing a second modification;
Figure 12 is a view similar to Figure 4 showing a third modification;
Figure 13 is a plan view of a composite plastics structure comprising part of a second embodiment of an internal combustion engine inlet manifold according to the invention;
Figure 14 is an elevation on arrow D in Figure 13;
Figure 15 is an end elevation on arrow E in Figure 13;
Figure 16 is a partial cross-section on the line XVI-XVI in Figure 13;
Figure 17 shows magnified and in greater detail a pair of abutting joint faces of the components shown in Figures 13 to 16; and
Figure 18 is a cross-section similar to Figure 16 showing a modification.

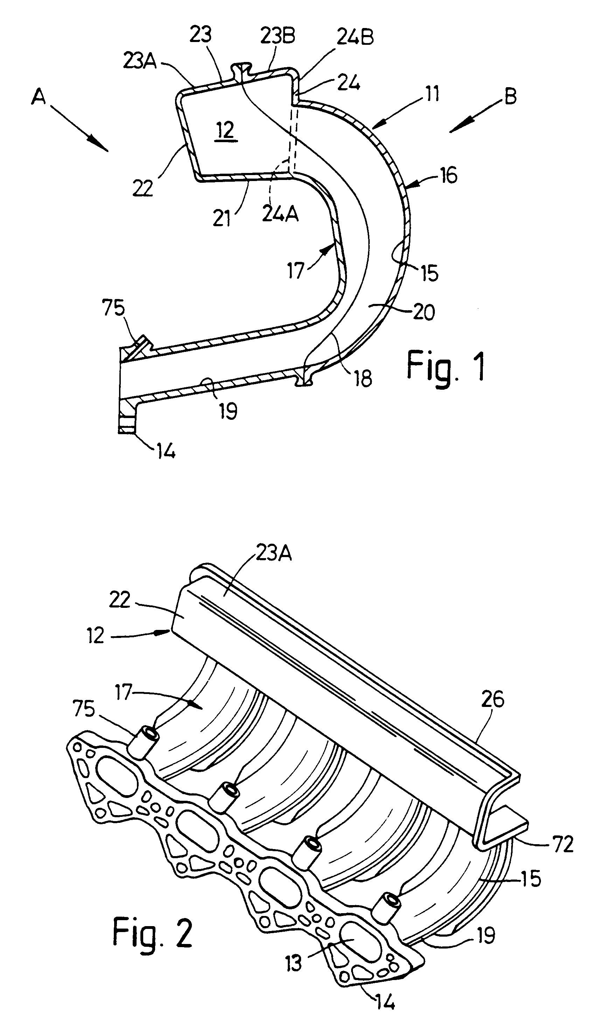

Referring to Figure 1, the composite plastics structure shown forms a housing 11 which defines a plenum 12 and four inlet tracts 13, each connected to and extending from the plenum. The structure forms part of an inlet manifold for connection to the cylinder head of an internal combustion engine by a flange 14 so that the inlet tracts 13 can supply air to the inlet ports of the engine.

Each inlet tract 13 is defined by a respective inlet duct 20 and includes a curved tract portion defined by a respective curved duct portion 15 of the housing 11. The extent of the curve is such that each curved duct portion in use substantially reverses the direction of gas flow through the inlet tract, ie, the arc of the curved duct portion extends over an angle substantially greater than 90 degrees but substantially less than 270 degrees.

The housing 11 comprises first and second components 16 and 17 of plastics material joined at a pair of abutting joint faces, indicated in Figure 1 by a joint line 18.

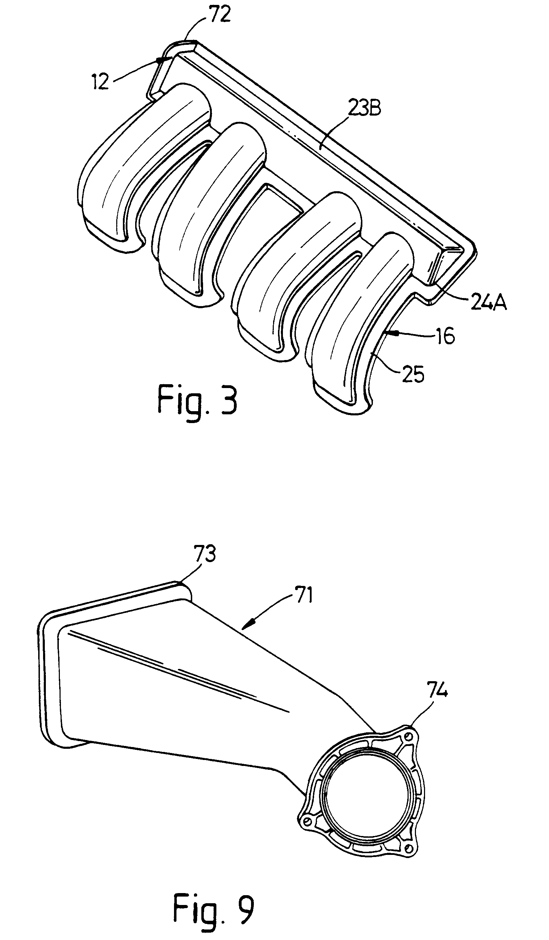

Figure 2 shows the second component 17 in more detail and Figure 3 shows the first component 16. The joint line 18 passes through the region of each curved duct portion 15 such that the first component 16 is on the outside of the curve and the second component 17 is on the inside of the curve, the joint faces being curved in the opposite direction to the curve of the duct in the region of each end of the curved duct portion. The second component 17 includes the flange 14 which interconnects adjacent duct portions 15, there being a respective straight duct portion 19 interposed between the flange and each curved duct portion 15.

Where the housing 11 defines the plenum 12, it comprises a base wall portion 21, a rear wall portion 22, a top wall portion 23 and a front wall portion 24. The base wall portion 21, the rear wall portion 22, the rear part 23A of the top wall portion 23 and the lower part 24A of the front wall portion 24 also serve to interconnect adjacent curved duct portions 15 of the second component 17.

Adjacent duct portions of the first plastics component 16 are interconnected by other wall portions of the plenum 12, these comprising the upper part 24B of the front wall portion 24 and the front part 23B of the top wall portion 23.

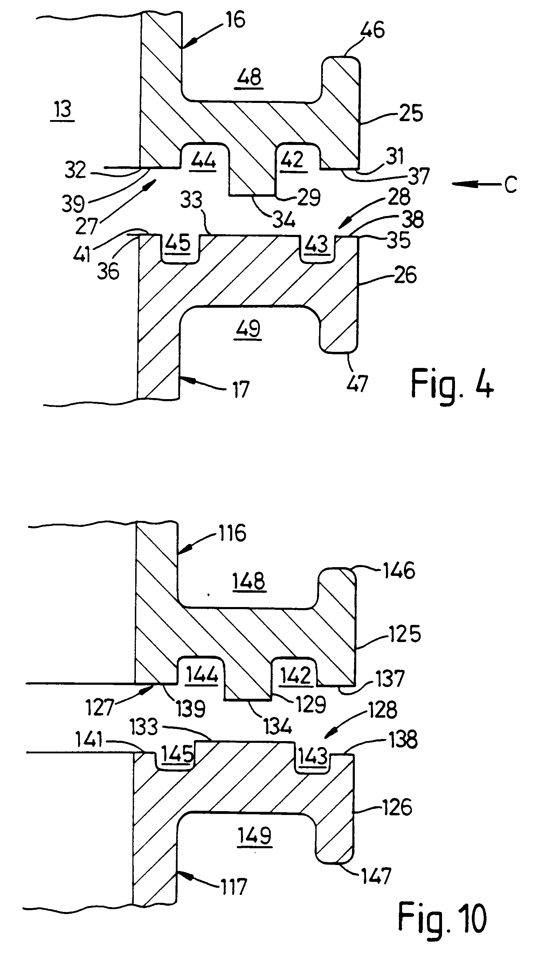

Each plastics component 16 and 17 has a flange 25 and 26 respectively. Figure 4 shows the flanges 25 and 26 in greater detail with the components 16 and 17 aligned preparatory to being joined together.

A first joint face 27 is on the flange 25 of the first component 16 and a second joint face 28 is on the flange 26 of the second component 17. The first joint face 27 has a projecting tongue 29 positioned intermediate two side edges 31 and 32 of the joint face. Side edge 31 is on the outside of the flange 25 whereas side edge 32 is on the inside, adjacent the inlet tract 13.

The second joint face 28 has an abutment surface 33 positioned opposite an end face 34 on the tongue 29 and interposed between an outer side edge 35 and an inner side edge 36. The first joint face 27 includes a first peripheral land 37 adjacent outer side edge 31. Similarly the second joint face 28 includes a second peripheral land 38 adjacent outer side edge 35. A third peripheral land 39 is adjacent the inner side edge 32 of the first joint face 27 and a fourth peripheral land 41 is adjacent the inner side edge 36 of the second joint face 28.

A groove 42 is between the tongue 29 and the first land 37, a groove 43 is between the abutment surface 33 and the second land 38, a groove 44 is between the tongue and the third land 39 and a groove 45 is between the abutment surface and the fourth land 41.

A peripheral rib 46 is formed on flange 25 on the opposite side to the first joint face 27 and a peripheral rib 47 is formed on flange 26 on the opposite side to the second joint face 28. Between each rib 46, 47 and the adjacent wall of the housing 11 there is a respective groove 48, 49 which together with the associated rib acts as a formation for engagement with a respective tool 51, 52 during joining of the joint faces.

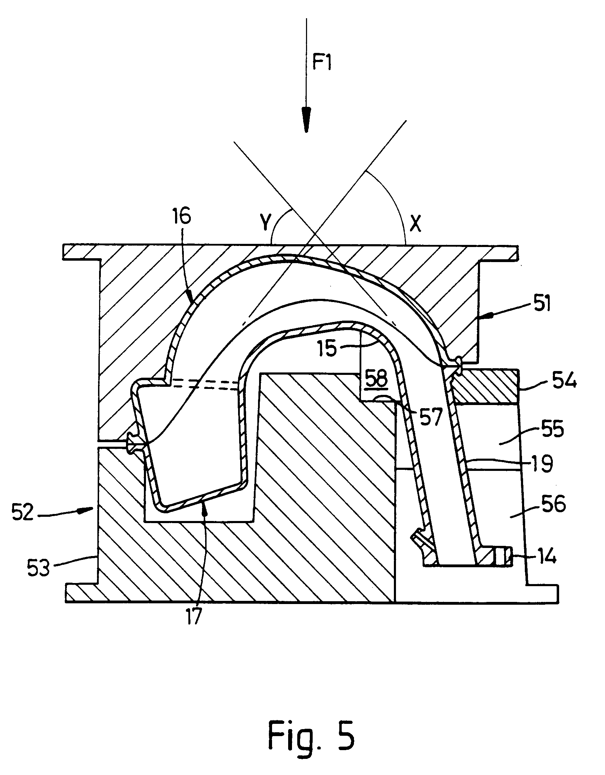

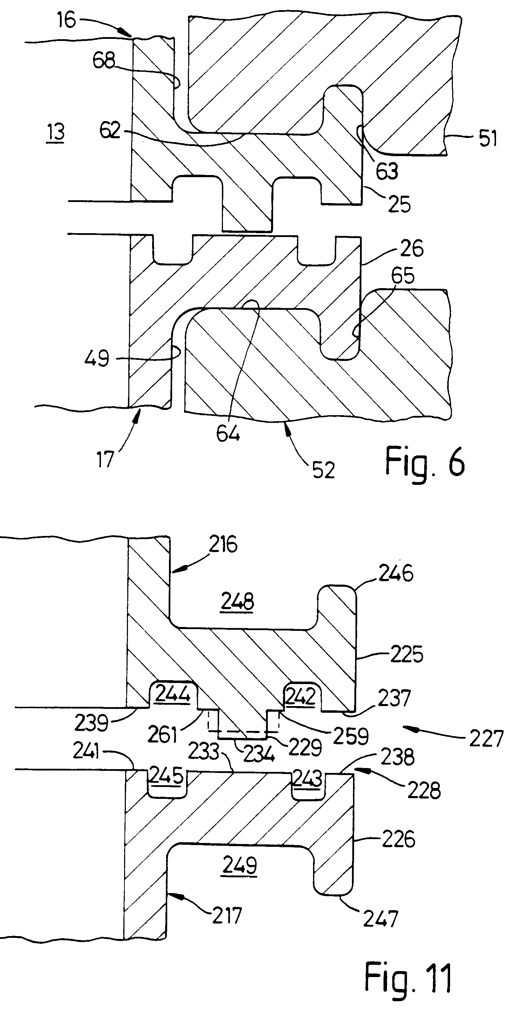

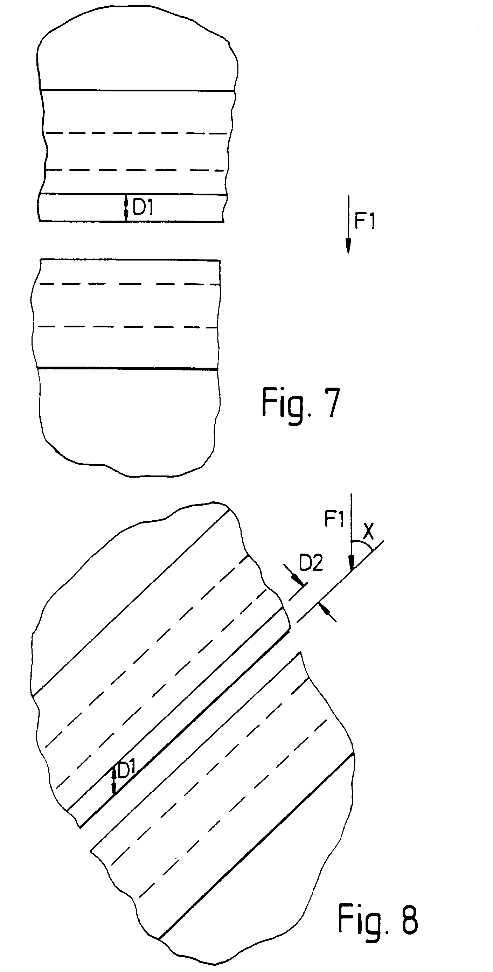

Figure 5 and Figure 6 show the first and second components 16 and 17 engaged in the tools 51 and 52 prior to joining at the joint faces 27 and 28. The upper tool 51 is in one piece and generally follows the contours of the first component 16. The lower tool 52 is in two parts comprising a base portion 53 and a closing piece 54. The base portion 53 has slots 55 to provide clearance for the straight duct portions 19, a recess 56 to provide clearance for the flange 14 and a recess 57 to locate the closing piece 54. Slots 58 in the closing piece 54 give clearance for the curved duct portions 15 adjacent the junction with the straight duct portions 19.

In the region of the flange 25 the upper tool 51 is profiled with a contact surface 62 to abut the base of the groove 48 and a groove 63 to engage the rib 46 and thereby support the first component 16 in the region of the first joint face 27. Similarly, in the region of the flange 26 the lower tool 52 is profiled with a contact surface 64 to abut the base of the groove 49 and a groove 65 to engage the rib 47 and thereby support the second component 17 in the region of the second joint face 28.

In use the upper tool 51 is attached to the movable platen of a friction welding machine and the lower tool 52 is attached to the fixed platen. The movable platen can exert a clamping force on the joint faces in the direction of the arrow F1 and can reciprocate in a direction normal to the section shown in Figure 5.

From Figure 7 it can be seen that where the joint face is perpendicular to the clamping force F1 the tongue 29 extends beyond the first and third peripheral lands 37 and 39 by an amount D1. The abutment surface 33 is level with the second and fourth peripheral lands 38 and 41 so that when the end face 34 of the tongue 29 is in contact with the abutment surface 33 there is a predetermined gap between the first and second lands 37 and 38 equal to the distance D1.

Where part of each joint face 27 and 28 is inclined to a plane perpendicular to the direction of the clamping force as indicated by angle X in Figure 5 and illustrated by Figure 8, the predetermined gap is reduced to a distance D2 given by D1. Cosine X when measured between the lands 37 and 38, the distance in the direction of the clamping force remaining constant at D1.

To join the components 16 and 17 the components are aligned in the tools 51 and 52 with the end face 34 of the tongue 29 in contact with the abutment surface 33. The components 16 and 17 are previously formed from a thermoplastics material using conventional injection moulding equipment and techniques. However, the nature of moulding a complex shape with wall sections without added stiffening ribs is that the final shape is not easy to predict from the mould design. To allow for this, at least one of the components, in this case the first component 16, is designed to be relatively flexible both in torsion and in bending.

The flexibility of component 16 allows the contact surface 62 and the groove 63 on the upper tool 51 to be made according to the shape of flange 26 of the second component 17. Contact surface 64 and groove 65 on the lower tool 52 are made to suit the second component 17 in its "as moulded" condition and contact surface 62 and groove 63 on the upper tool 51 are positioned so as to align the tongue 29 relative to the abutment surface 33 and to ensure a uniform spacing between the tongue end face 34 and the abutment surface in the direction of the clamping force F1 as described above.

Hence the groove 63 cooperates with the rib 46 on the first component to correct any misalignment of the first component 16 relative to the second component 17.

Similarly, whilst there may be distortion of the first component which allows a varying clearance between the contact surface 62 on the upper tool 51 and the base of groove 48 in the flange 25, when the clamping force F1 is applied, the reaction force between the tongue end face 34 and the abutment surface 33 forces the first component to conform to the tool where it contacts the flange 25 and any clearance between the contact surface 62 and the base of groove 48 is closed up. There is then substantially uniform contact between the tongue end face 34 and the abutment surface 33 over the whole length of the tongue, the joint face of the first component being forced to conform to the joint face of the second component and create pressure on the joint faces over substantially their whole length.

With the clamping force F1 maintained, the upper tool 51 is vibrated in the direction previously indicated. Friction between the tongue 29 and the abutment surface causes local melting of the plastics material sufficient to cause melting of the tongue and the abutment surface. The vibration continues for a fixed time to substantially eliminate the gap between the first and second lands 37 and 38 and between the third and fourth lands 39 and 41.

The clamping force F is maintained for a fixed cooling time after ceasing vibrations to allow the weld material to solidify. The grooves 42, 43, 44 and 45 provide clearance spaces into which the molten plastics can flow from the interface between the tongue 29 and the abutment surface without disturbing the surface of the inlet tracts 13 or creating an unsightly appearance at the flanges 25 and 26.

In a particular example the tongue 29 was 3mm wide at the end face 34 and projected to give a predetermined gap between the first and second lands of between 1.0 and 1.2mm. This dimension, which could be described as the tongue melt-down distance, was subject to a variation of between 0 and 0.5mm according to the actual gap between the tongue end face and the abutment surface adjacent to the point of measurement. Both components were formed from Du Pont glass filled nylon type Zytel 70G30 and the welding equipment was a Bielomatik K3215 applying a force F1 equivalent to a mean pressure of 90 bar at the tongue end face. The upper tool was vibrated at a frequency of 235 Hz at an amplitude of 2.0mm for a fixed time of 15 seconds and the force F1 maintained for a fixed cooling time of 8 seconds.

The materials and parameters chosen in the particular example would be varied where components of different shape, size and purpose are used and would be subject to appropriate experimentation.

It has been found that by ensuring substantially uniform contact between the tongue end face 34 and the abutment surface prior to vibrating one component relative to the other the time for the vibration can be substantially reduced. This means that where the joint face 27 is inclined to the direction of the clamping force, that is inclined at an angle to a plane perpendicular to the direction of the clamping force as indicated by angles X and Y in Figure 8, then the projecting distance of the tongue has to be reduced as previously indicated. In practice, conformity to within 0.5mm under the clamping load L gives the required reduction in the vibration time. Measurement of this conformity is assisted by ensuring that the interface between the end face 34 of the tongue and the abutment surface 33 is within the gap between the first and second lands 37 and 38. This allows inspection of the interface between the end face of the tongue and the abutment surface and facilitates the use of optical or feeler type measuring equipment.

To complete the inlet manifold the inlet flange adapter 71 shown in Figure 9 is connected to the open end of the plenum 12. Figures 2 and 3 each show part of a flange 72 at the plenum open end and this is connected to a flange 73 on the adapter 71 using similar friction welding techniques to those described above. The adapter 71 has another flange 74 for connection to a throttle valve assembly which, in use, is connected to an air filter to control the flow of air to the inlet manifold. Bosses 75 on the second component 17 are provided for fuel injection nozzles.

In the first modification shown in Figure 10 features which are the same or similar to those in Figures 1 to 4 are given the same reference numeral with the addition of 100. It shows that the abutment surface 133 can be above the second peripheral land 138, although it is not necessary that it be level with or above the fourth land 141, except to provide suitable dimensions for the grooves 144 and 145.

In the second modifications shown in Figure 11 features which are the same or similar to those in Figures 1 to 4 are given the same reference numeral with the addition of 200. It shows that the grooves 242 and 244 can be distanced from the tongue 229 by a fifth land 259 and a sixth land 261. This makes the opposite grooves 242 and 243, 244 and 245 more closely aligned and enables the welding equipment to be controlled by monitoring the power required for vibrations. When the abutment surface 233 contacts the fifth and sixth lands 259 and 261 there is an increase in the power requirement and this can be used to switch off the vibrations. Friction between the opposing lands 237 and 238 or 239 and 241 can be used to similar effect. Alternatively, the gap D1 can be monitored and the vibration ceased when it has reduced to a specific magnitude.

Figure 11 also shows how the thickness of the tongue 229 can be increased in accordance with the inclination of the joint faces to a plane perpendicular to the direction of the clamping force. Thus, for example, if the cross-sectional area of the tongue is substantially constant in a plane normal to the end face 234 the amount of melt material per unit length of joint face remains the same to keep a uniform weld.

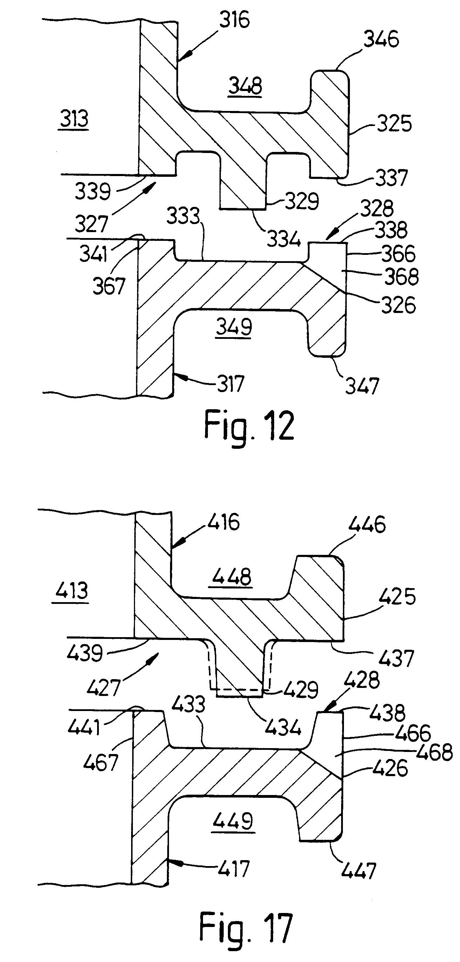

In the third modification shown in Figure 12 features which are the same or similar to those shown in Figures 1 to 4 are given the same reference numeral with the addition of 300.

The form of the flange 325 of the first component 316 is substantially the same as that of flange 25 in Figure 4. However, the flange 326 differs in that the second land 338 is formed on a first peripheral rib 366 which projects beyond the abutment surface in the direction of the flange 325 on the first component. Similarly the fourth land 341 is formed on a second peripheral rib 367 which also projects beyond the abutment surface in the direction of the first component. There are no grooves between the abutment surface 333 and the second and fourth lands 338 and 341 so the abutment surface forms the base of a U shaped groove formed by the peripheral ribs.

In the embodiment described with reference to Figures 1 to 9 and the modifications described with reference to Figures 10 and 11, the fact that the tongue extends beyond the first land and that the abutment surface is level with or above the second land means that the line of contact between the tongue end face and the abutment surface is visible from outside the common joint face, allowing the use of feeler gauges or more sophisticated optical methods of checking the fit of these surfaces as described earlier. In the third modification this is allowed by the use of slots 368 which interrupt the first peripheral rib 366 at intervals around the flange 326. These slots 368 extend below the abutment surface.

It has been found that there are limitations on the maximum angle X or Y by which the joint face is inclined to a plane perpendicular to the direction of the clamping force and for successful results 60 degrees appears to be the maximum. It follows that since one joint face must be reciprocated relative to the other this is measured in a direction perpendicular to the direction of vibration.

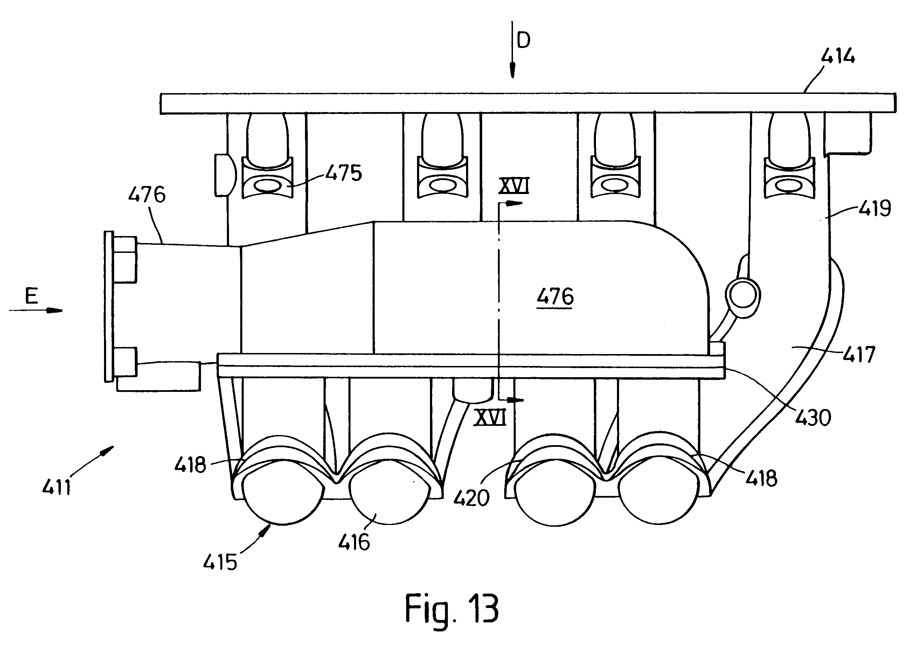

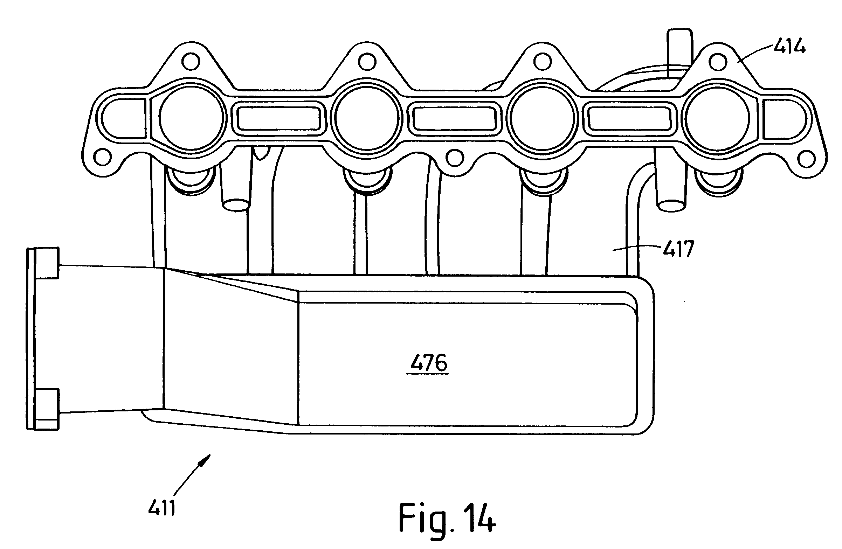

In the second embodiment of the invention now described with further reference to Figures 13 to 16, features which are the same or similar to those in Figures 1 to 4 are given the same reference numeral with the addition of 400.

A housing 411 defines a plenum 412 and four inlet tracts 413, each connected to and extending from the plenum. The housing 411 forms part of an inlet manifold for connection to the cylinder head of an internal combustion engine by a flange 414.

Each inlet tract 413 is defined by an inlet duct 420 which includes a curved tract portion defined by a respective curved duct portion 415 of the housing 411. In use, each curved duct portion 415 substantially reverses the direction of gas flow through the inlet tract from the plenum 412 to the outlets at the flange 414.

The housing 411 comprises components 416 and 417 of plastics material joined at abutting joint faces.

Each duct 420 is made up of a first component 416 and a second component 417, joined at a curved joint line 418 which passes through the region of each curved duct portion 415 such that the first component 416 is on the outside of the curve and the second component 417 is on the inside of the curve. The second component 417 is common to all four inlet ducts and includes the flange 414 which interconnects adjacent duct portions 415, there being a respective straight duct portion 419 interposed between the flange and each curved duct portion 415. On the other hand, the first component 416 is common to adjacent pairs of ducts 420, so that there are two to make up the four ducts.

Where the housing 411 defines the plenum 412, it comprises a base wall portion 421, a rear wall portion 422, a top wall portion 423 and a front wall portion 424. The front part 421B of the base wall portion 421, the front part 423B of the top wall portion 423 and the front wall portion 424 also serve to interconnect adjacent curved duct portions 415.

The other wall portions of the housing 411 which define the plenum 412 form parts of a third plastics component 476, these comprising the rear part 421A of the base wall portion 421, the rear wall portion 422 and the rear part 423A of the top wall portion 423, the joint line with the second component 417 being indicated at 430.

Each of the first and second plastics components 416 and 417 has a flange 425 and 426 respectively. Figure 17 shows the flanges 425 and 426 in greater detail with components 416 and 417 aligned preparatory to being joined together.

In most respects the details of flanges 425 and 426 are similar to those of flanges 325 and 326 shown in Figure 12. The principle differences are that surface 427 has no grooves between the lands 437 and 439 and that ribs 466 and 467 are correspondingly deeper.

Adjacent curved duct portions 415 of the first plastics component 416 are interconnected in the region of adjacent portions of the joint face 427 by the merging of adjacent portions of the joint flanges 425 to form two siamezed pairs.

The first and second components 416 and 417 are assembled using tools and methods substantially as described in relation to the first embodiment of the invention, an upper tool being profiled with a contact surface to abut the base of groove 448 and to engage rib 446. Similarly, the lower tool is profiled to abut the base of groove 449 and to engage rib 447.

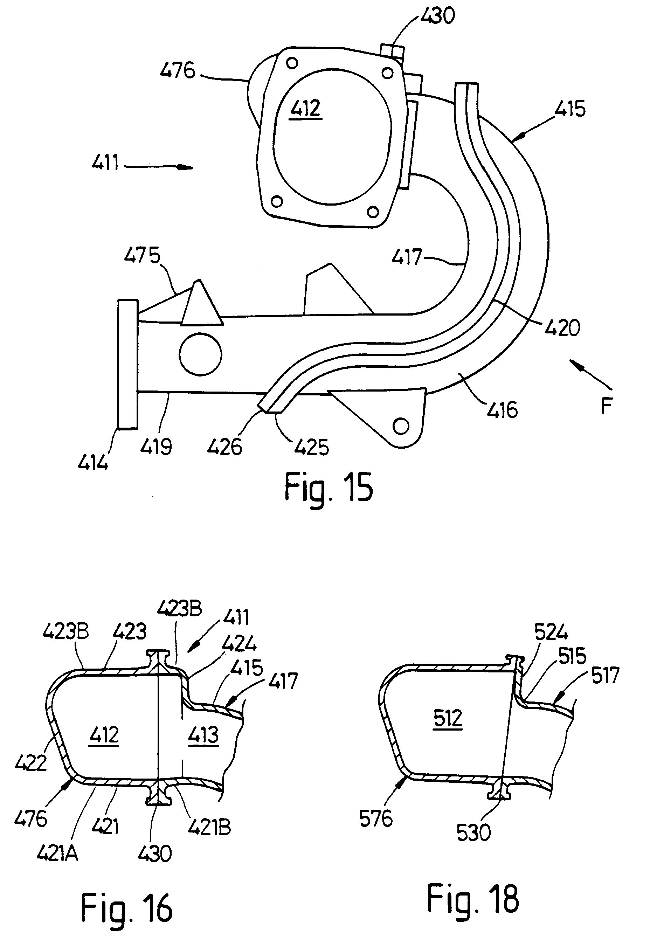

In use the upper tool is attached to the movable platten of a friction welding machine and the lower tool is attached to the fixed platen. The movable platen can exert a clamping force F2 on the joint faces in the direction of the arrow F2 and can reciprocate in a direction normal to the section shown in Figure 16, ie in the same direction as arrow E in Figure 13.

From Figure 17 it can be seen that the tongue 429 extends beyond the first and third peripheral lands 437 and 439 by an amount which is greater than the projection of the ribs 466 and 467. Thus when the end face 434 of the tongue 429 is in contact with the abutment surface 433 there is a predetermined gap between the first and second lands 437 and 438.

As with the first embodiment of the invention described with reference to Figures 1 to 9, this predetermined gap is constant in the direction of the clamping force F2 including areas where each joint face 427 and 428 is inclined to a plane perpendicular to the direction of the clamping force.

Figure 17 also shows (in dashed lines) how the thickness of the tongue 429 can be increased where the joint faces are inclined to the direction of the clamping force so that the volume of melt material per unit length of joint face remains substantially constant to keep a uniform weld.

To join the components 416 and 417 the components are aligned in the tools with the end face 434 of the tongue 429 in contact with the abutment surface 433, the components 416 and 417 having been previously formed from a thermoplastics material using conventional injection moulding equipment and techniques. Each of the first components 416 is designed to be relatively flexible both in torsion and in bending to provide substantially uniform contact between the tongue end face 434 and the abutment surface 433 over the whole length of the tongue as previously described in respect of the first embodiment.

With the clamping force F2 maintained, the upper tool is vibrated in the direction previously indicated. Friction between the tongue 429 and the abutment surface 433 causes local melting of the plastics material sufficient to cause melting of the end portion of the tongue and the abutment surface. The vibration continues for a fixed time to substantially eliminate the gap between the first and second lands 437 and 438 and between the third and fourth lands 439 and 441.

The clamping force F2 is maintained for a fixed cooling time after ceasing vibrations to allow the weld material to solidify. The ribs 466 and 467 provide clearance spaces on each side of the tongue 429 into which the molten plastics can flow without disturbing the surface of the inlet tracts 413 or creating an unsightly appearance at the flanges 425 and 426. Slots 468 allow inspection of the interface between the tongue 429 and the abutment surface 433.

To complete the inlet manifold, the third plastics component 476 is connected to form the plenum 412 using similar friction welding techniques to those described above. The third component 476 has a flange 474 for connection to a throttle valve assembly which, in use, is connected to an air filter to control the flow of air to the inlet manifold. Bosses 475 on the second component 417 are provided for fuel injection nozzles.

In the modification shown in Figure 18 features which are the same or similar to those in Figures 13 to 17 are given the same reference numeral with the addition of 100. It shows that the joint line 530 between the second component 517 and the third component 576 can coincide with the inside of the front wall 524 of the plenum 512, thereby simplifying the manufacture of the second component 517.

As with the first embodiment of the invention the angle by which the joint face is inclined to a plane perpendicular to the direction of the clamping force F2 is kept within a 60 degrees maximum. Similarly, it is advantageous to ensure that where the joint faces are curved in the opposite direction to the curve of the duct in the region of either end of the curved duct portion then no part of the joint face should be inclined at an angle substantially less than 10 degrees to a plane perpendicular to the clamping force.

Flexibility of one component relative to the other is achieved by attention to the design of the cross-section and minimisation of the wall thickness. However, it can also be helped by selection of materials. For example, the second component 17 or 417 may be of a glass-filled nylon such as Zytel 70G30 and the first material made in a mineral-filled nylon such as Minlon 10B104, both by Du Pont. Zytel 70G30 has a flexural modulus of 5 Giga Pascals whereas Minlon 10B104 has a flexural modulus of 3 Giga Pascals.

## Claims

1. An internal combustion engine inlet manifold having a housing (11, 411) defining a plenum (12, 412, 512) for connection to atmosphere and a number of inlet tracts (13, 413) each connected to and extending from the plenum for connection to an engine to be supplied with air, each inlet tract including a curved tract portion which is defined by a respective curved duct portion (15, 415, 515) of the housing in which each curved duct portion extends over an angle substantially greater than 90 degrees but substantially less than 270 degrees so that in use each curved duct portion substantially reverses the direction of gas flow through the inlet tract, the housing comprising a first component (16, 116, 216, 316, 416) of plastics material having a first joint face (27, 127, 227, 327, 427) thereon and a second component (17, 117, 217, 317, 417) of plastics material having a second, complementary, joint face (28, 128, 228, 328, 428) thereon, the components being joined by aligning the components with the joint faces in substantially uniform contact, applying a clamping force (F1, F2) to create pressure on the joint faces and vibrating one component relative to the other whilst maintaining the clamping force to create friction at the joint faces and thereby join the components by welding of the plastics material, the joint faces being curved in the region of the curved duct portions so that in said region one component (17, 117, 217, 317, 417) is substantially on the inside of the curve and the other component (16, 116, 216, 316, 416) is substantially on the outside of the curve and arranged so that no part of each joint face is inclined at an angle (X, Y) substantially greater than 60 degrees to a plane perpendicular to the direction of the clamping force.

2. A manifold according Claim 1 characterised in that the joint faces (27, 28; 427, 428) are curved in the opposite direction to the curve of the duct in the region of each end of the curved duct portion (15, 415).

3. A manifold according to Claim 2 characterised in that no part of the joint face (27, 28; 427; 428) where curved in said opposite direction is inclined at an angle (X or Y) substantially less than 10 degrees to a plane perpendicular to the clamping force (F1, F2).

4. A manifold according to any preceding claim characterised in that said one plastics component (17, 417) includes a flange (14, 414) to connect the manifold to the engine and that adjacent duct portions are interconnected at the flange and by a wall portion (21, 22, 23A, 24A; 421B; 423B, 424; 515) of the plenum (12, 412, 512) to form one single plastics component (17, 417, 517).

5. A manifold according to any preceding claim characterised in that the joint faces (127, 128) extend into the plenum (12).

6. A manifold according to Claim 4 characterised in that the plenum (12) has wall portions (21, 22, 23, 24) defined by the first component (16) and the second component (17).

7. A manifold according to any of Claims 1 to 4 characterised in that the joint faces (427, 428) are solely in a portion of the housing (411) defining the inlet tracts (413).

8. A manifold according to Claim 4 characterised in that the plenum (412) has wall portions (421, 422, 423, 424) defined by the second component (417) and by a third component (476) of plastics material joined to the second component (417) by friction welding.

9. A manifold according to any preceding claim characterised in that adjacent duct portions (415) of said other plastics component (416) are interconnected in the region of adjacent portions of the joint faces (427).

10. A manifold according to any preceding claim characterised in that, before the components (16, 17; 116, 117; 216, 217; 316, 317; 416, 417) are joined, the first joint face (27, 127, 227, 327, 427) has a projecting tongue (29, 129, 229, 329, 429) with an end face (34, 134, 234, 334, 434) thereon positioned intermediate two side edges (31, 32; 131, 132; 231, 232; 331, 332; 431, 432) of the first joint face and the second joint face (28, 128, 228, 328, 428) has an abutment surface (33, 133, 233, 333, 433) intermediate two side edges (35, 36; 135, 136; 235, 236; 335, 336; 435, 436) of the second joint face, the arrangement being such that, when the clamping force (F1, F2) is applied, the end face of the tongue abuts the abutment surface with substantially uniform contact over the full length of the tongue.

11. A manifold according to Claim 10 characterised in that, before the components (16, 17; 116, 117; 216, 217; 316, 317; 416, 417) are joined, the first joint face (27, 127, 227, 327, 427) has a first peripheral land (37, 137, 237, 337, 437) adjacent one of the respective side edges (31, 131, 231, 331, 431) and the second joint face (28, 128, 228, 328, 428) has a second peripheral land (38, 138, 238, 338, 438) adjacent one of the respective side edges (35, 135, 235, 335, 435), the joint faces being arranged so that when the components are aligned with the end face (34, 134, 234, 334, 434) of the tongue (29, 129, 229, 329, 429) in abutment with the abutment surface the peripheral lands are opposite and with a predetermined gap (D1, D2) therebetween which is substantially constant in the direction of the clamping force (F1, F2) and vibration of one component relative to the other is ceased when the predetermined gap is substantially eliminated.

12. A manifold according to Claim 11 characterised in that, before the components (316, 317; 416, 417) are joined, one of said peripheral lands (338, 438) is on a peripheral rib (366, 466) on the same joint face (328, 428) as the abutment surface (333, 433), the peripheral rib having slots (368, 468) which allow inspection of the interface between the end face (334, 434) of the tongue (329, 429) and the abutment surface.

13. A manifold according to any of Claims 10 to 12 characterised in that the width of the tongue (229, 429) is varied in accordance with the inclination (X, Y) of the joint faces (227, 228; 427, 428) to a plane perpendicular to the direction of the clamping force (F1, F2) to provide a substantially constant volume of weld material per unit length of joint face.

14. A manifold according to any preceding claim characterised in that said one plastics component (17, 417) has substantially greater rigidity than said other plastics component (16, 416).

## Patentansprüche

1. Einlaßkrümmer für Verbrennungsmotoren, der ein Gehäuse (11, 411) aufweist, das eine Kammer (12, 412, 512) zur Verbindung mit der Atmosphäre und mehrere Einlaßtrakte definiert (13, 413), die jeweils zur Verbindung mit einem mit Luft zu versorgenden Motor mit der Kammer verbunden sind und sich davon erstrecken, wobei jeder Einlaßtrakt einen gekrümmten Traktteil enthält, der durch einen jeweiligen gekrümmten Kanalteil (15, 415, 515) des Gehäuses definiert wird, in dem sich jeder gekrümmte Kanalteil über einen Winkel von wesentlich über 90 Grad, aber wesentlich unter 270 Grad erstreckt, so daß jeder gekrümmte Kanalteil im Gebrauch die Richtung der Gasströmung durch den Einlaßtrakt im wesentlichen umkehrt, wobei das Gehäuse eine erste Komponente (16, 116, 216, 316, 416) aus Kunststoffmaterial mit einer ersten Fügefläche (27, 127, 227, 327, 427) und eine zweite Komponente (17, 117, 217, 317, 417) aus Kunststoffmaterial mit einer zweiten, komplementären Fügefläche umfaßt, wobei die Komponenten durch derartiges Ausrichten der Komponenten, daß die Fügeflächen in im wesentlichen gleichmäßigen Kontakt stehen, Anlegen einer Klemmkraft (F1, F2) zur Erzeugung von Druck auf den Fügeflächen und Vibrieren einer Komponente relativ zur anderen unter Aufrechterhaltung der Klemmkraft zur Erzeugung von Reibung an den Fügeflächen und dadurch Zusammenfügen der Komponenten durch Verschweißen des Kunststoffmaterials zusammengefügt werden, wobei die Fügeflächen im Bereich der gekrümmten Kanalteile so gekrümmt sind, daß sich in dem Bereich eine Komponente (17, 117, 217, 317, 417) im wesentlichen auf der Innenseite der Krümmung und die andere Komponente (16, 116, 216, 316, 416) im wesentlichen auf der Außenseite der Krümmung befindet und sie so angeordnet sind, daß kein Teil der Fügeflächen in einem Winkel (X, Y) von wesentlich über 60 Grad zu einer senkrecht zur Richtung der Klemmkraft liegenden Ebene geneigt ist.

2. Einlaßkrümmer nach Anspruch 1, dadurch gekennzeichnet, daß die Fügeflächen (27, 28; 427, 428) in der Krümmung des Kanals im Bereich jedes Endes des gekrümmten Kanalteils (15, 415) entgegengesetzter Richtung gekrümmt sind.

3. Einlaßkrümmer nach Anspruch 2, dadurch gekennzeichnet, daß kein Teil der Fügefläche (27, 28; 427, 428), wo sie in jener entgegengesetzten Richtung gekrümmt ist, in einem Winkel (X oder Y) von wesentlich weniger als 10 Grad zu einer senkrecht zur Klemmkraft (F1, F2) liegenden Ebene geneigt ist.

4. Einlaßkrümmer nach einem der vorhergehenden Ansprüche, dadurch gekennzeichnet, daß eine Kunststoffkomponente (17, 417) einen Flansch (14, 414) zur Verbindung des Einlaßkrümmers mit dem Motor enthält und daß benachbarte Kanalteile an dem Flansch durch einen Wandteil (21, 22, 23A, 24A; 421B; 423B, 424; 525) der Kammer (12, 412, 512) miteinander verbunden sind, so daß eine einzige Kunststoffkomponente (17, 417, 517) gebildet wird.

5. Einlaßkrümmer nach einem der vorhergehenden Ansprüche, dadurch gekennzeichnet, daß sich die Fügeflächen (127, 128) in die Kammer (12) erstrecken.

6. Einlaßkrümmer nach Anspruch 4, dadurch gekennzeichnet, daß die Kammer (12) Wandteile (21, 22, 23, 24) aufweist, die durch die erste Komponente (16) und die zweite Komponente (17) definiert werden.

7. Einlaßkrümmer nach einem der Ansprüche 1 bis 4, dadurch gekennzeichnet, daß sich die Fügeflächen (427, 428) einzig in einem Teil des die Einlaßtrakte (413) definierenden Gehäuses (411) befinden.

8. Einlaßkrümmer nach Anspruch 4, dadurch gekennzeichnet, daß die Kammer (412) Wandteile (421, 422, 423, 424) aufweist, die durch die zweite Komponente (417) und eine dritte Komponente (476) aus Kunststoffmaterial, die durch Reibungsschweißen mit der zweiten Komponente (417) zusammengefügt ist, definiert werden.

9. Einlaßkrümmer nach einem der vorhergehenden Ansprüche, dadurch gekennzeichnet, daß benachbarte Kanalteile (415) der anderen Kunststoffkomponente (416) im Bereich benachbarter Teile der Fügeflächen (427) miteinander verbunden sind.

10. Einlaßkrümmer nach einem der vorhergehenden Ansprüche, dadurch gekennzeichnet, daß vor Zusammenfügen der Komponenten (16, 17; 116, 117; 216, 217; 316, 317; 416, 417) eine eine Endfläche (34, 134, 234, 334, 434) aufweisende vorragende Zunge (29, 129, 229, 329, 429) der ersten Fügefläche (27, 127, 227, 327, 427) zwischen zwei Seitenrändern (31, 32; 131, 132; 231, 232; 331, 332; 431, 432) der ersten Fügefläche positioniert ist und eine Stoßfläche ( 33, 133, 233, 333, 433) der zweiten Fügefläche (28, 128, 228, 328, 428) sich zwischen zwei Seitenrändern (35, 36; 135, 136; 235, 236; 335, 336; 435, 436) der zweiten Fügefläche befindet, wobei die Anordnung derart ausgeführt ist, daß die Endfläche der Zunge nach Anlegen der Klemmkraft (F1, F2) an die Stoßfläche stößt, wobei über die gesamte Länge der Zunge ein im wesentlichen gleichmäßiger Kontakt besteht.

11. Einlaßkrümmer nach Anspruch 10, dadurch gekennzeichnet, daß sich vor dem Zusammenfügen der Komponenten (16, 17; 116, 117; 216, 217; 316, 317; 416, 417) ein erster Umfangssteg (37, 137, 237, 337, 437) der ersten Fügefläche (27, 127, 227, 327, 427) neben einem der jeweiligen Seitenränder (31, 131, 231, 331, 431) und ein zweiter Umfangssteg (38, 128, 228, 328, 428) der zweiten Fügefläche (28, 128, 228, 328, 428) neben einem der jeweiligen Seitenränder (35, 135, 235, 335, 435) befinden, wobei die Fügeflächen so angeordnet sind, daß bei derartiger Ausrichtung der Komponenten, daß die Endfläche (34, 134, 234, 334, 434) der Zunge (29, 129, 229, 329, 429) an die Stoßfläche stößt, die Umfangsstege einander mit einem vorbestimmten Spalt (D1, D2) dazwischen gegegenüberliegen, der im wesentlichen in Richtung der Klemmkraft (F1, F2) gleich groß ist, und daß Vibrieren einer Komponente relativ zur anderen beendet wird, wenn der vorbestimmte Spalt im wesentlichen beseitigt ist.

12. Einlaßkrümmer nach Anspruch 11, dadurch gekennzeichnet, daß vor dem Zusammenfügen der Komponenten (316, 317; 416, 417) einer der Umfangsstege (338, 438) sich an einer an der gleichen Fügefläche (328, 428) wie die Stoßfläche (333, 433) ausgebildeten Umfangsrippe (366, 466) befindet, wobei die Umfangsrippe Schlitze (368, 468) aufweist, die eine Überprüfung der Grenzfläche zwischen der Endfläche (334, 434) der Zunge (329, 429) und der Stoßfläche ermöglichen.

13. Einlaßkrümmer nach einem der Ansprüche 8 bis 12, dadurch gekennzeichnet, daß sich die Breite der Zunge (229, 429) entsprechend der Neigung (X, Y) der Fügeflächen (227, 228; 427, 428) zu einer senkrecht zur Richtung der Klemmkraft (F1, F2) liegenden Ebene ändert, damit für ein im wesentlichen konstantes Volumen Schweißmaterial pro Längeneinheit der Fügefläche gesorgt wird.

14. Einlaßkrümmer nach einem der vorhergehenden Ansprüche, dadurch gekennzeichnet, daß die eine Kunststoffkomponente (17, 417) eine wesentlich größere Steifigkeit als die andere Kunststoffkomponente (16, 416) aufweist.

## Revendications

1. Collecteur d'admission de moteur à combustion interne ayant un carter (11, 411) définissant une chambre (12, 412, 512) pour la connexion à l'atmosphère et un certain nombre de conduits d'admission (13, 413), chacun étant connecté à la chambre et s'étendant depuis celle-ci pour permettre une connexion avec un moteur devant être alimenté en air, chaque conduit d'admission comportant une portion de conduit courbe qui est définie par une portion de tuyau courbe respective (15, 415, 515) du carter dans laquelle chaque portion de tuyau courbe s'étend suivant un angle substantiellement supérieur à 90 degrés mais substantiellement inférieur à 270 degrés de sorte qu'en fonctionnement, chaque portion de tuyau courbe inverse substantiellement le sens d'écoulement de gaz à travers le conduit d'admission, le carter comprenant un premier composant (16, 116, 216, 316, 416) en matière plastique portant une première face de joint (27, 127, 227, 327, 427) et un second composant (17, 117, 217, 317, 417) en matière plastique portant une seconde face de joint complémentaire (28, 128, 228, 328, 428), les composants étant assemblés en alignant les composants avec les faces de joint en contact substantiellement uniforme, en appliquant une force de serrage (F1, F2) pour créer une pression sur les faces de joint et en faisant vibrer un composant par rapport à l'autre tout en maintenant la force de serrage pour créer une friction au niveau des faces de joint et assembler ainsi les composants en soudant la matière plastique, les faces de joint étant courbées dans la région des portions de tuyau courbes, de sorte que dans ladite région, un composant (17, 117, 217, 317, 417) soit substantiellement à l'intérieur de la courbe et que l'autre composant (16, 116, 216, 316, 416) soit substantiellement à l'extérieur de la courbe et arrangées de sorte qu'aucune partie de chaque face de joint ne soit inclinée à un angle (X, Y) substantiellement supérieur à 60 degrés par rapport à un plan perpendiculaire à la direction de la force de serrage.

2. Collecteur selon la revendication 1, caractérisé en ce que les faces de joint (27, 28; 427, 428) sont courbées dans la direction opposée à la courbe du tuyau dans la région de chaque extrémité de la portion de tuyau courbe (15, 415).

3. Collecteur selon la revendication 2, caractérisé en ce qu'aucune partie de la face de joint (27, 28; 427; 428) où elle est courbée dans ladite direction opposée n'est inclinée à un angle (X ou Y) substantiellement inférieur à 10 degrés par rapport à un plan perpendiculaire à la force de serrage (F1, F2).

4. Collecteur selon l'une quelconque des revendications précédentes, caractérisé en ce que ledit un composant en plastique (17, 417) comporte une bride (14, 414) pour connecter le collecteur au moteur et en ce que des portions de tuyau adjacentes sont interconnectées au niveau de la bride et par une portion de paroi (21, 22, 23A, 24A; 421B; 423B, 424; 515) de la chambre (12, 412, 512) pour former un composant unique en plastique (17, 417, 517).

5. Collecteur selon l'une quelconque des revendications précédentes, caractérisé en ce que les faces de joint (127, 128) s'étendent dans la chambre (12).

6. Collecteur selon la revendication 4, caractérisé en ce que la chambre (12) a des portions de paroi (21, 22, 23, 24) définies par le premier composant (16) et le second composant (17).

7. Collecteur selon l'une quelconque des revendications 1 à 4, caractérisé en ce que les faces de joint (427, 428) sont uniquement dans une portion du carter (411) définissant les conduits d'admission (413).

8. Collecteur selon la revendication 4, caractérisé en ce que la chambre (412) a des portions de paroi (421, 422, 423, 424) définies par le second composant (417) et par un troisième composant (476) en matière plastique assemblés au second composant (417) par soudage par friction.

9. Collecteur selon l'une quelconque des revendications précédentes, caractérisé en ce que les portions de tuyau adjacentes (415) dudit autre composant en plastique (416) sont interconnectées dans la région de portions adjacentes des faces de joint (427).

10. Collecteur selon l'une quelconque des revendications précédentes, caractérisé en ce qu'avant l'assemblage des composants (16, 17; 116, 117; 216, 217; 316, 317; 416, 417), la première face de joint (27, 127, 227, 327, 427) a une langue en saillie (29, 129, 229, 329, 429) ayant une face d'extrémité (34, 134, 234, 334, 434) positionnée entre deux bords latéraux (31, 32; 131, 132; 231, 232; 331, 332; 431, 432) de la première face de joint et la seconde face de joint (28, 128, 228, 328, 428) a une surface de butée (33, 133, 233, 333, 433) entre deux bords latéraux (35, 36; 135, 136; 235, 236; 335, 336; 435, 436) de la seconde face de joint, l'arrangement étant tel que lorsque la force de serrage (F1, F2) est appliquée, la face d'extrémité de la langue vient en butée contre la surface de butée avec un contact substantiellement uniforme sur toute la longueur de la langue.

11. Collecteur selon la revendication 10, caractérisé en ce qu'avant l'assemblage des composants (16, 17; 116, 117; 216, 217; 316, 317; 416, 417), la première face de joint (27, 127, 227, 327, 427) a une première facette d'appui périphérique (37, 137, 237, 337, 437) adjacente à l'un des bords latéraux respectifs (31, 131, 231, 331, 431) et la seconde face de joint (28, 128, 228, 328, 428) a une seconde facette d'appui périphérique (38, 138, 238, 338, 438) adjacente à l'un des bords latéraux respectifs (35, 135, 235, 335, 435), les faces de joint étant arrangées de telle sorte que lorsque les composants sont alignés avec la face d'extrémité (34, 134, 234, 334, 434) de la langue (29, 129, 229, 329, 429) en butée contre la surface de butée, les facettes d'appui périphériques sont en regard et avec un vide prédéterminé (D1, D2) entre elles, qui est substantiellement constant dans la direction de la force de serrage (F1, F2) et la vibration d'un composant par rapport à l'autre cesse lorsque le vide prédéterminé est substantiellement éliminé.

12. Collecteur selon la revendication 11, caractérisé en ce qu'avant l'assemblage des composants (316, 317; 416, 417), l'une desdites facettes d'appui périphériques (338, 438) est sur une nervure périphérique (366, 466) sur la même face de joint (328, 428) que la surface de butée (333, 433), la nervure périphérique ayant des fentes (368, 468) qui permettent l'inspection de l'interface entre la face d'extrémité (334, 434) de la langue (329, 429) et la surface de butée.

13. Collecteur selon l'une quelconque des revendications 10 à 12, caractérisé en ce que la largeur de la langue (229, 429) est variée en fonction de l'inclinaison (X, Y) des faces de joint (227, 228; 427, 428) par rapport à un plan perpendiculaire à la direction de la force de serrage (F1, F2) pour fournir un volume substantiellement constant de matériau de soudure par longueur unitaire de face de joint.

14. Collecteur selon l'une quelconque des revendications précédentes, caractérisé en ce que ledit un composant en plastique (17, 417) a une rigidité substantiellement supérieure audit autre composant en plastique (16, 416).
